(19) Europäisches Patentamt

European Patent Office

Office européen des brevets

(11) **EP 0 861 419 B1**

(12) **EUROPÄISCHE PATENTSCHRIFT**

(45) Veröffentlichungstag und Bekanntmachung des Hinweises auf die Patenterteilung:
**09.01.2002   Patentblatt 2002/02**

(21) Anmeldenummer: **96938178.9**

(22) Anmeldetag: **12.11.1996**

(51) Int Cl.[7]: **G01D 21/02**, G01F 1/68, G01N 27/419

(86) Internationale Anmeldenummer:
**PCT/EP96/04936**

(87) Internationale Veröffentlichungsnummer:
**WO 97/18443 (22.05.1997 Gazette 1997/22)**

(54) **VERFAHREN UND VORRICHTUNG ZUR SIMULTANEN MESSUNG EINES VOLUMENSTROMS UND WENIGSTENS EINES GASPARTIALDRUCKES**

METHOD AND DEVICE FOR SIMULTANEOUS MEASUREMENT OF A VOLUME FLOW AND OF AT LEAST ONE PARTIAL PRESSURE

PROCEDE ET DISPOSITIF POUR MESURER SIMULTANEMENT UN FLUX VOLUMIQUE ET AU MOINS UNE PRESSION GAZEUSE PARTIELLE

(84) Benannte Vertragsstaaten:
**DE FR GB IT SE**

(30) Priorität: **14.11.1995  DE 19542379**

(43) Veröffentlichungstag der Anmeldung:
**02.09.1998   Patentblatt 1998/36**

(73) Patentinhaber: **Messerschmid, Ernst**
**72766 Reutlingen (DE)**

(72) Erfinder:
• **MESSERSCHMID, Ernst,**
**D-72766 Reutlingen (DE)**
• **FASOULAS, Stefanos**
**D-70378 Stuttgart (DE)**

(74) Vertreter: **Gleiss, Alf-Olav, Dipl.-Ing. et al**
**Patentanwalt, Maybachstrasse 6A**
**70469 Stuttgart (DE)**

(56) Entgegenhaltungen:
**EP-A- 0 198 695          DE-C- 4 201 216**
**GB-A- 2 263 776          US-A- 5 006 421**

• **PATENT ABSTRACTS OF JAPAN vol. 16, no. 100 (P-1323), 11.März 1992 & JP 03 277959 A (CHINO CORP)**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung und ein Verfahren zur Messung eines Volumenstroms und wenigstens eines Gaspartialdruckes eines gasförmigen Mediums.

Es ist bekannt, Volumenströme und Gaspartialdrücke mit voneinander getrennten Meßgeräten zu bestimmen. Sollen beide Strömungsparameter ermittelt werden, so ist die Anordnung von zwei Meßgeräten notwendig, die zu einer Erhöhung der Komplexität sowie der Fehler- und Ausfallswahrscheinlichkeit führen. Nachteilig ist weiterhin, daß das vorstehend beschriebene Meßverfahren, das heißt der Einsatz von mehreren Meßgeräten zu relativ hohen Herstellungs- und Betriebskosten führt.

Aus der DE 42 01 216 C1 ist ein Sauerstoffsensor bekannt, dessen Meßprinzip auf den bekannten paramagnetischen Eigenschaften von Sauerstoff basiert. In diesem Sensor wird der zu messende Gasstrom durch eine Anordnung von verzweigten Kanälen geführt, wobei einer dieser Teilkanäle mit einem Magnetfeld beaufschlagt werden kann. Die Sauerstoffmoleküle werden somit durch das Magnetfeld in einen dieser Teilkanäle geleitet, so dass in den Kanälen Strömungsunterschiede entstehen. Diese Strömungsurterschiede in den einzelnen Kanälen werden nach dem Prinzip der Hitzdrahtanemometrie ermittelt und ausgewertet. Dazu müssen die Teilkanäle mit einem konstanten Massenstrom beaufschlagt werden. Hierfür ist ein Strömungsregler vorgesehen. Mit dem bekannten Sensor ist also eine Messung eines Volumenstroms und wenigstens eines Gaspartialdruckes, hier der von Sauerstoff, meßbar. Nachteilig bei diesem bekannten Sensor ist, daß eine Vielzahl von Teilsensoren (Hitzdrahtanemometer) notwendig sind. Insgesamt ist der Aufbau des bekannten Sensors relativ aufwendig.

Aus der JP-A-03 277 959 (Patent Abstract of Japan, Bd. 16, Nummer 100 (P-1323), 1. März 1992) ist ein Sensor zur Messung eines Gaspartialdruckes bekannt, der einen Festkörperelektrolyt aufweist, an dem zwei Elektroden angebracht sind. An diesen Elektroden kann eine Spannung abgegriffen werden, die sich durch Ionenleitung in dem Festkörperelektrolyt ändert. Der Festkörperelektrolyt ist mit einer Heizung ausgestattet.

Es ist daher Aufgabe der Erfindung, eine Vorrichtung und ein Verfahren zur simultanen Messung eines Volumenstroms und wenigstens eines Gaspartialdruckes anzugeben, bei dem der Sensor eine kleine Bangrösse und geringe Herstellungskosten aufweist.

Zur Lösung dieser Aufgabe wird eine Vorrichtung vorgeschlagen, die die in Anspruch 1 genannten Merkmale aufweist. Die Vorrichtung zeichnet sich dadurch aus, daß die Meßeinrichtung nur einen Sensor umfaßt, der mindestens zwei unabhängige Meßgrößen des gasförmigen Mediums erfaßt. Hierdurch ist eine erhebliche Reduzierung der Baugröße des als Sonde ausgebildeten Sensors möglich, wodurch eine verstärkte Miniaturisierung der Sonde realisierbar ist. Der Sensor weist weiterhin einen verringerten Energiebedarf sowie geringe Herstellungskosten auf.

Weitere Ausgestaltungen ergeben sich aus den abhängigen Ansprüchen.

Die Aufgabe wird auch durch ein Verfahren gelöst, das die in Anspruch 6 genannten Merkmale aufweist. Dadurch, daß mindestens zwei unterschiedliche Eigenschaften nur eines Sensors zur Messung der wenigstens zwei unabhängigen Meßgrößen berücksichtigt werden, kann eine dementsprechende Meßeinrichtung relativ klein aufgebaut werden und weist neben einem geringen Energiebedarf relativ kleine Herstellungskosten auf.

Weitere Ausgestaltungen ergeben sich aus den abhängigen Ansprüchen.

Die Erfindung wird im folgenden anhand der Zeichnung näher erläutert. Es zeigen:

Figur 1     einen schematischen Längsschnitt durch eine Rohrleitung, in der ein Sensor angeordnet ist;

Figur 2     eine vereinfachte Darstellung der Gitterstruktur eines Festkörperelektrolyts;

Figur 3     einen schematischen Aufbau eines Sensors gemäß Figur 1;

Figur 4     ein Diagramm, in dem eine Wechselspannung in Abhängigkeit einer Temperatur dargestellt ist;

Figur 5     ein Diagramm, in dem die Nusseltzahl in Abhängigkeit der Reynoldszahl für einen Zylinderkörper aufgetragen ist;

Figur 6     ein Diagramm, in dem die zusätzliche Leistungsaufnahme bei Kühlung des Sensors durch einen Volumenstrom aufgetragen ist und

Figur 7     ein Diagramm, in dem eine zusätzliche Leistungsaufnahme bei Kühlung des Sensors (Durchmesser=2 mm) durch ein Volumenstrom aufgetragen ist.

Die erfinderische Grundidee ist, daß eine Sonde, die zur Messung eines Gaspartialdruckes einsetzbar ist, so aufgebaut wird, daß gleichzeitig nach dem Prinzip eines Hitzdraht- oder eines Heißfilmanemometers der Volumenstrom gemessen werden kann. Von großer technischer Bedeutung ist dabei die Möglichkeit, den Volumenstrom auch in sehr heißen Strömungen zu messen, deren Temperatur über 1000 °C betragen kann, da die meisten eingesetzten Sensoren eine hohe Arbeitstemperatur benötigen und aushalten.

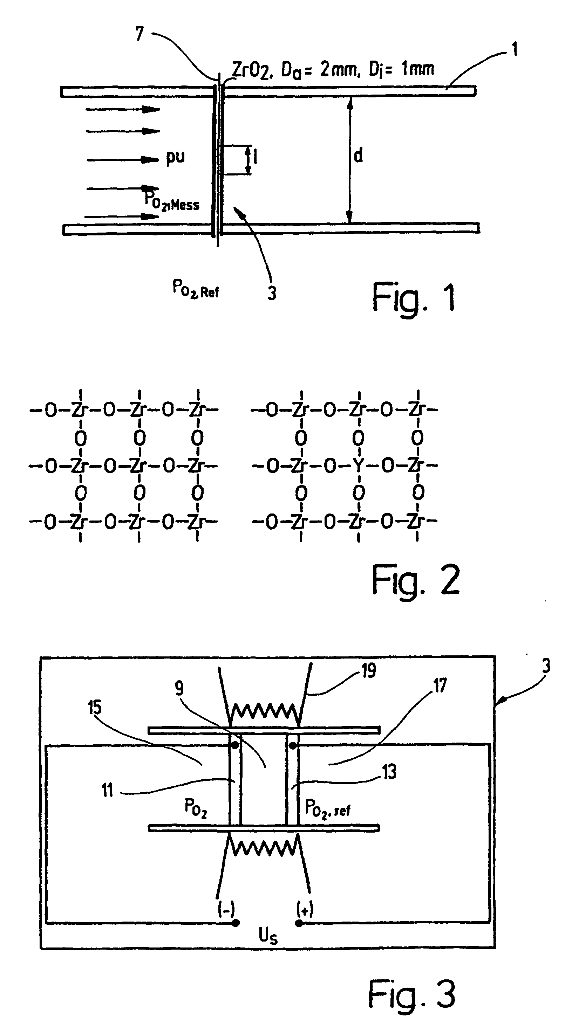

Figur 1 zeigt einen schematischen Längsschnitt durch eine Rohrleitung 1, in der eine hier rohrförmige Sonde 3 angeordnet ist, die einen kreiszylindrischen Querschnitt aufweist. Aufgrund des Aufbaus und der Funktion wird die Sonde 3 im folgenden auch als Sensor bezeichnet. Die Sonde 3 besteht aus einem Festkörperelektrolyt, der in diesem Ausführungsbeispiel rein beispielhaft Zirkoniumdioxid ist. Im Innern der Sonde 3 ist eine Heizung 7 angeordnet, deren Heizlänge mit einem 1 gekennzeichnet ist und auf deren Funktion nachfolgend noch näher eingegangen wird.

Figur 2 zeigt eine Prinzipskizze der Gitterstruktur des Festkörperelektrolyten (Zirkoniumdioxyd) zur Messung des Sauerstoffpartialdruckes. Die linke Abbildung in Figur 2 zeigt die Gitterstruktur von reinem Zirkoniumdioxyd ($ZrO_2$). Aus der rechten Abbildung in Figur 2 geht Zirkoniumdioxyd hervor, das mit Yttriumoxid ($Y_2O_3$) stabilisiert beziehungsweise dotiert ist und das eine Sauerstoff-Fehlstelle aufweist.

Figur 3 zeigt einen prinzipiellen Aufbau der Sonde 3 beziehungsweise des Sensors. Der Sensor umfaßt einen Festkörperelektrolyten 9, der mit zwei Elektroden 11 und 13 beschichtet ist. Die Elektroden 11 und 13 sind mit einer hier nicht dargestellten Meßelektronik verbunden, mit der eine Sondenspannung $U_s$ meßbar ist. Die Elektrode 11 bildet dabei eine Anode und die Elektrode 13 eine Kathode. Die Elektrode 11 ist einer Meßkammer 15 und die Elektrode 13 einer Referenzkammer 17 zugeordnet. Die Sonde ist hier über eine angedeutete Elektrodenheizung 19 beheizbar.

Die Funktion des Sensors wird im folgenden näher erläutert. Durch die Sauerstoff-Fehlstelle im Atomgitter kann bei erhöhten Sensortemperaturen eine Sauerstoffionenleitung stattfinden, wenn durch den Sensor zwei mit unterschiedlichen Sauerstoffkonzentrationen gefüllte Kammern getrennt werden (siehe Figur 3). Der Konzentrationsunterschied erzeugt ein Spannungssignal, das mit zwei Elektroden, die beispielsweise aus porösem Platin, Wolfram oder Graphit bestehen, abgegriffen werden kann und das in sehr guter Übereinstimmung mit der Nernst'schen Gleichung beschrieben wird:

$$U = U_O + \frac{\Re T_s}{4F} \ln \frac{p_{O_2,ref}}{p_{O_2,meß}} \quad , \qquad\qquad (1)$$

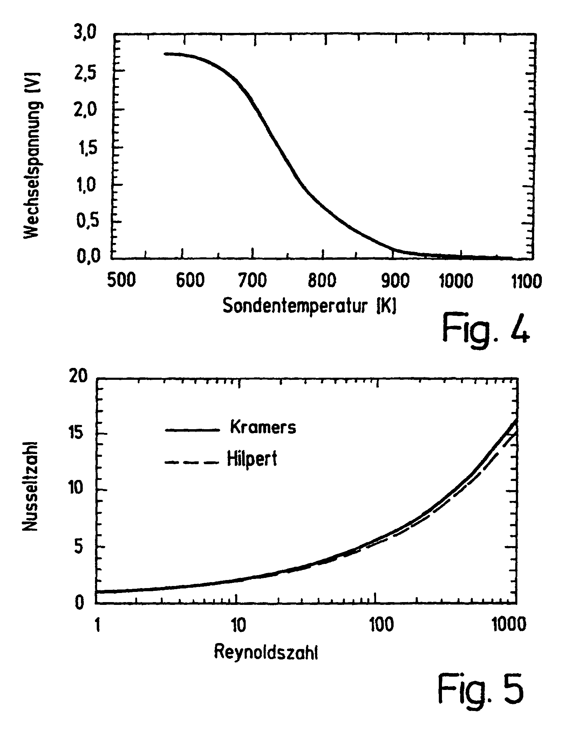

wobei $U_o$ eine Offset-Spannung darstellt, die beispielsweise durch eine Temperaturdifferenz der Elektroden auftritt. Die Ermittlung der für die exakte Auswertung dieser Gleichung notwendigen Sensortemperatur $T_s$ kann über eine simultane Messung des Innenwiderstands des Sensors mit einer überlagerten Wechselspannung erfolgen, deren Abhängigkeit von der Temperatur durch eine vorhergehende Eichung ermittelt wird. Ein Beispiel einer solchen Eichkurve ist in Figur 4 dargestellt. Natürlich kann dies auch über ein Thermoelement erfolgen.

Die Leistungsaufnahme handelsüblicher Sauerstoffsensoren ist sehr groß (10 Watt bis 20 Watt), die zu einer hohen Temperatur umliegender Bauteile führt. Ein wichtiges Ziel ist daher die Minimierung des Energiebedarfs des Sensors , das heißt die Minimierung des beheizten Körpervolumens. Durch die Verkleinerung der Sonde besteht dann aber die Möglichkeit, ihre Abkühlung durch den Gasstrom zu bestimmen und zur Messung des Volumenstroms heranzuziehen.

Eine Methode zur Bestimmung oder Überprüfung von gemessenen Volumenströmen oder Geschwindigkeiten in einer Strömung ist mit der Bestimmung des Wärmestromes auf einen beheizten Körper, meist auf einen "unendlich" ausgedehnten Zylinder, gegeben. Diese Methode bezeichnet man als Hitzdrahtanemometrie. In Analogie zur Hitzdrahtmethode kann nun die Festkörperelektrolytsonde so aufgebaut werden, daß damit simultan auch die Messung des Volumenstromes ermöglicht wird. Da die Temperatur der Sonde ohnehin für die Auswertung der Nernst'schen Gleichung benötigt wird, kann nun also entweder der zeitabhängige Temperaturgradient oder bei elektronisch konstant gehaltener Temperatur die Änderung der zugeführten Leistung zur Messung einer weiteren Größe verwendet werden. Mit der letztgenannten Variante ist eine Minimierung der Fehlermöglichkeiten in einfacher Weise möglich.

Im folgenden soll eine Abschätzung der erforderlichen Abmaße, das heißt des Durchmessers der Sonde, erfolgen. Der Wärmestrom $\dot{q}$, bezogen auf die Oberfläche $O = \pi D_a l$ ($D_a$ = Außendurchmesser, 1 = beheizte Länge) von einem geheizten Zylinder auf die Strömung, wird meist mit der dimensionslosen Nusseltzahl angegeben:

$$Nu = \frac{\dot{q} D_a}{\lambda(T_w - T)} = \frac{\dot{Q}}{\pi l \lambda(T_w - T)} \, , \qquad\qquad (2)$$

wobei $\lambda$ die Wärmeleitfähigkeit des Fluids, $T_w$ die Wandtemperatur des Zylinders und $T$ die Temperatur der Anströmung charakterisieren. Die Nusseltzahl hängt von verschiedenen Größen ab. Bei den meisten Untersuchungen kann jedoch der Einfluß von vielen Parametern vernachlässigt werden und es verbleibt für einen unendlich langen, quer angeströmten Zylinder lediglich die Abhängigkeit von der Prandtlzahl Pr und der Reynoldszahl Re. Die Reynolds- und Prandtlzahlen sind dabei definiert als

$$Re = \frac{\rho u D_a}{\mu} \; , \tag{3}$$

und

$$Pr = \frac{\mu c_p}{\lambda} \; . \tag{4}$$

Dabei ist $c_p$ die spezifische Wärmekapazität bei konstantem Druck, $\mu$ die dynamische Viskosität, $\varrho$ die Dichte des Fluids und u die Geschwindigkeit in der Anströmung. Die Fluideigenschaften werden bei der sogenannten Filmtemperatur, das heißt dem Mittelwert zwischen Draht- und Fluidtemperatur, eingesetzt:

$$T_f = \frac{T_w + T}{2} \; . \tag{5}$$

Für die Abhängigkeit der Nusseltzahl von diesen Kennzahlen können aufgrund von experimentellen Ergebnissen verschiedene Näherungsfunktionen angegeben werden, beispielsweise nach Kramers

$$Nu = 0.42 Pr^{0.2} + 0.57 Pr^{0.33} Re^{05} \; , \tag{6}$$

oder nach Hilpert

$$Nu = C \, Re^n Pr^{0.333} \; , \tag{7}$$

wobei die Konstanten C und n in Tabelle 1 zusammengefaßt sind. Ein Vergleich der berechneten Nusseltzahlen nach Kramers (Gleichung 6) beziehungsweise nach Hilpert (Gleichung 7) ist in Figur 5 dargestellt. Es fällt auf, daß für den hier interessierenden Bereich kleiner Reynoldszahlen die Abweichungen gering sind. Im folgenden wird deshalb die etwas einfachere Gleichung nach Hilpert verwendet.

Tabelle 1:

| Die Konstanten C und n für Gleichung 7 | | | | | |
|---|---|---|---|---|---|
| Re | C | n | Re | C | n |
| <4 | 0,989 | 0,330 | <40000 | 0,193 | 0,618 |
| <40 | 0,911 | 0,385 | >40000 | 0,0266 | 0,805 |
| <4000 | 0,683 | 0,466 | | | |

Wird die Temperatur des Zylinders auf elektronischem Wege konstant gehalten, so wird die durch die Strö-mung abgeführte Wärmemenge $\dot{Q}$ gerade durch die Änderung der elektrischen Heizleistung kompensiert. Das bedeu-tet:

$$\dot{Q} = (UI)_{u \neq 0} - (UI)_{u=0} = \Delta(UI) \; . \tag{8}$$

Damit folgt:

4

$$C\,Re^{n}Pr^{0.333} = \frac{\dot{Q}}{\pi l \lambda (T_w - T)} = \frac{\Delta(UI)}{\pi l \lambda (T_w - T)} \; , \qquad (9)$$

oder wenn man die Definition der Reynoldszahl einsetzt

$$\rho u = \left( \frac{\mu^n \Delta(UI)}{D_a^n C \pi l \lambda Pr^{0.333}(T_w - T)} \right)^{1/n} \qquad (10)$$

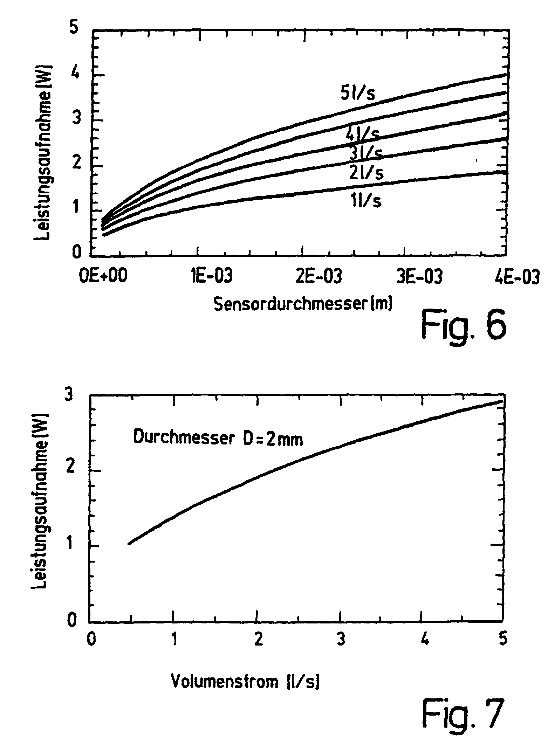

Die Abhängigkeit der Leistungsänderung aufgrund der Strömung vom Durchmesser der Sonde und dem zu messenden Volumenstrom ist in Figur 6 dargestellt. Figur 7 zeigt schließlich für einen Sensoraußendurchmesser von 2 mm die Abhängigkeit des Wärmeflusses vom Volumenstrom.

Wenn die elektronische Schaltung zur Beibehaltung einer konstanten Temperatur nicht realisierbar ist, so kann der Wärmefluß auch über die Temperaturänderung bestimmt werden. Dieser Fall führt aber zu zusätzlichen Fehlern, da viele eingesetzte Parameter eine Temperaturabhängigkeit aufweisen. Es sollte noch erwähnt werden, daß die hier vorgestellten Gleichungen nur eine sehr grobe Näherung der Problematik zusammenfassen; in jedem Fall muß für den experimentellen Aufbau eine Eichung durchgeführt werden.

Ein letzter offener Punkt ist die Frage nach der Trägheit der Apparatur, das heißt die Zeit, die benötigt wird, um einen nennenswerten Einfluß der Strömung auf den Zylinder festzustellen. Diese Zeitspanne darf nicht zu groß sein, damit eine realistische Volumenstrommessung möglich ist. Das bedeutet, daß der Temperaturgradient für die hier interessierenden Zeitspannen einen nennenswerten Betrag aufweist, beispielsweise für einen Ausatemvorgang von ca. 1 s Dauer, der mit etwa 10 Hz Frequenz aufgenommen werden sollte. Der Temperaturgradient der auftritt, wenn die Temperatur beziehungsweise der Innenwiderstand des Sensors nicht konstant gehalten wird, ergibt sich aus

$$\frac{dT}{dt} = \frac{\dot{Q}}{m_{ZrO_2} c_{p,ZrO_2}} = \frac{\dot{Q}}{\rho_{ZrO_2} \frac{\pi}{4}\left(D_a^2 - D_i^2\right) l\, c_{p,ZrO_2}} \; . \qquad (11)$$

Bei $\dot{Q}$=1W Kühlleistung durch die Strömung, das bei einem Außendurchmesser von 2 mm einem Volumenstrom von ca. 0,5 l/s entspricht (siehe Figur 7) und einer beheizten Länge von 1 cm und einem Innendurchmesser von 1 mm ergibt sich mit $Q_{ZrO2}$=5000 kg/m$^3$ und $C_{P,ZRO2}$=400 J/(kgK)

$$\frac{dT}{dt} \approx 21\ K/s \; , \qquad (12)$$

das heißt bei einer Meßfrequenz von 10 Hz müßte die einer Temperaturänderung von ca. 2 K (Innenwiderstandsänderung!) entsprechende Leistungsaufnahme geregelt werden. Diese Abschätzung zeigt, daß der vorstehend genannte Aufbau realisierbar ist, da in einer Rohrströmung im Gegensatz zu der hier angenommenen gleichmäßigen Strömung ein ausgeprägtes Geschwindigkeitsprofil vorliegt.

Mit dem hier beschriebenen Sensor ist die simultane Messung des Sauerstoffpartialdrucks und des Massenstroms realisierbar. Bei bekannter Dichte, beispielsweise durch eine Temperaturmessung der Anströmung, kann auch die Geschwindigkeit der Strömung ermittelt werden. Als Anwendungsgebiete kommen dann alle Arten von Strömungen in Frage, bei denen zusätzlich zum Volumenstrom auch ein oder mehrere Gaspartialdrücke von Interesse sind. Ein Anwendungsgebiet des vorstehend beschriebenen Meßverfahrens beziehungsweise des Sensors liegt im Bereich der Medizintechnik, in der der Sensor beziehungsweise die Sonde zur Untersuchung des Sauerstoffverbrauchs, der in der medizinischen Diagnostik einen bedeutenden vitalen Parameter darstellt, beim Menschen einsetzbar ist. Mittels der Sonde kann der Volumenstrom und der Sauerstoffpartialdruck in der Ausatemluft bestimmt werden. Dem Sauerstoffverbrauch des Menschen kommt in der sport- und arbeitsmedizinischen sowie rehabilitativen Leistungsdiagnostik, in der Intensivmedizin, der Pneumologie, der Kardiologie, der Pädiatrie, in der Beurteilung von Störungen der Lunge oder bei einer Lungenfunktionsprüfung eine zentrale Bedeutung zu. Durch den Aufbau des Sensors ist eine ausgeprägte Miniaturisierung des Sensors möglich, wodurch ein Einsatz der Sonde für telemetrische Untersuchungen beim Menschen oder zur Steuerung von Herzschrittmachern durch die Atmung unter wechselnden körperlichen Belastungen ermöglicht wird. Hierzu müßten noch der $CO_2$-Gehalt und die Feuchtigkeit der Ausatemluft mit bereits verfügbaren Sensoren gemessen werden. Ein weiteres Anwendungsgebiet des Sensors/der Sonde ist die Bestimmung der Herz/Atemfunktionen von im Weltraum befindlichen Astronauten, wodurch ein Vergleich mit den auf der Erde ermittelten Werte möglich ist.

Ein weiteres Anwendungsgebiet des Sensors ist der Einsatz in der Abgasanalytik zur Bestimmung und nachfolgenden Steuerung und Regelung der Luftzumischung, wobei gleichzeitig die Dichtigkeit des Systems durch die Volumenstrommessung geprüft werden kann. Der Sensor ist auch bei hohen Abgastemperaturen einsetzbar (> 1000 °C).

In einer vorteilhaften Ausführungsform der Erfindung muß der Sauerstoff auf der Referenzseite (Referenzkammer 17) nicht durch die normale Umgebungsluft bereitgestellt, sondern kann durch das thermodynamische Gleichgewicht von Metalloxyden zur Verfügung gestellt werden (zum Beispiel Pd/PdO "innere Referenz"). Damit ist ein geschlossenes System möglich, das heißt die zylinderförmige Sonde wird dann beispielsweise mit einem Emailglas geschlossen. Dieser Aufbau wird vorzugsweise für alle Anwendungsfälle der Partialdruckmessung eingesetzt, da er einen minimalen Energie-, Massen-, Volumen- und Materialbedarf aufweist und zusätzlich keinen Referenzdruck aus einem offenen System benötigt.

In einer weiteren vorteilhaften Ausführungsform der Erfindung ist es möglich, nicht direkt die erzeugte Spannung nach der Nernst'schen Gleichung (1) zu messen, sondern eine konstante Spannung auf die Elektroden zu bringen und den fließenden Strom zu messen. Wird der Sensor/die Sonde außerdem geometrisch mit einer sogenannten Diffusionsfalle versehen, so entsteht eine Linearität zwischen dem zu messenden Partialdruck und dem fließenden Strom. Durch die amperometrische Schaltung ist eine sehr genaue lineare Messung im Bereich 0,5% bis 50% Sauerstoffanteil möglich.

Der in Figur 1 beispielhaft dargestellte Aufbau der zylinderförmigen Festkörperelektrolytsonde ist insbesondere für den Einsatz in einer Rohrströmung geeignet. Ohne die begrenzenden Wände ist bei diesem Aufbau auch der Einsatz für Freistrahluntersuchungen möglich. In einer vorteilhaften Ausführungsform der Vorrichtung ist vorgesehen, daß der Sensor die begrenzenden Wände, also die Rohrwandung, des Rohres 1 (siehe Figur 1) oder Teile davon bildet. Hierdurch wird der Aufbau des Sensors/der Sonde weiter vereinfacht.

Die Sonde 3 ist außer für Sauerstoff auch für andere Gasarten und Konfigurationen einsetzbar, wobei ihr Querschnitt in Größe und Kontur variabel ist. Die Sonde ist sowohl für den stationären als auch, insbesondere aufgrund der möglichen Miniaturisierung, für den mobilen Einsatz einsetzbar. Außerdem kann er für die Charakterisierung von laminaren und turbulenten sowie stationären und instationären Strömungen eingesetzt werden. Das kompakte und robuste Meßsystem weist eine gute Reproduzierbarkeit und Genauigkeit auf.

## Patentansprüche

1. Vorrichtung zur Messung eines Volumenstroms und wenigstens eines Gaspartialdruckes eines gasförmigen Mediums mit einer Meßeinrichtung enthaltend:

   - eine elektrisch beheizbare Sonde (3) bestehend aus einem Festkörperelektrolyt (9), der mit zwei Elektroden (11,13) beschichtet ist, wobei die eine Elektrode (11) einer Meßkammer (15) und die andere Elektrode (13) einer Referenzkammer (17) zugeordnet ist,

   - und eine Meßelektronik, mit der die Elektroden (11,13) zur Bestimmung des Gaspartialdruckes aufgrund der Sondenspannung verbunden sind und mit der die Heizung (19) der Sonde (3) zur Bestimmung des Volumenstroms aufgrund des zeitabhängigen Temperaturgradienten oder bei konstant gehaltener Temperatur der Sonde (3) aufgrund der zugeführten Leistung verbunden ist.

2. Vorrichtung nach Anspruch 1, in der die Sonde (3) in einem durchströmten, vorzugsweise kreiszylindrischen Rohr (1) angeordnet ist.

3. Vorrichtung nach Anspruch 2, in der die Wandung des Rohrs (1) von der Sonde (3) gebildet ist.

4. Vorrichtung nach Anspruch 1, wobei der Festkörperelektrolyt (9) aus Zirkoniumdioxid besteht.

5. Vorrichtung nach Anspruch 5, wobei das Zirkoniumdioxid mit Yttriumoxid ($Y_2O_3$) dotiert ist.

6. Verfahren zur Messung eines Volumenstroms und wenigstens eines Gaspartialdruckes eines gasförmigen Mediums mit einer elekrisch beheizbaren Sonde (3) bestehend aus einem Festkörperelektrolyt (9), der mit zwei Elektroden (11,13) beschichtet ist, wobei die eine Elektrode (11) einer Meßkammer (15) und die andere Elektrode (13) einer Referenzkammer (17) zugeordnet ist, wobei der Gaspartialdruck aufgrund der an den Elektroden (11,13) abgegriffenen Sondenspannung bestimmt wird, und der Volumenstrom aufgrund des zeitabhängigen Temperaturgradienten der Sonde (3) oder bei konstant gehaltener Temperatur aufgrund der der Sonde (3) zugeführten Leistung bestimmt wird.

7. Verfahren nach Anspruch 6, in dem die Sonde (3) zur Messung von Sauerstoff eingesetzt wird.

8. Verfahren nach einem der Ansprüche 6 oder 7, in dem die Sonde (3) für Untersuchungen von Freistrahlen eingesetzt wird.

9. Verfahren nach einem der Ansprüche 6 bis 8, in dem die Sonde (3) im Unterdruck- und Überdruckbereich eingesetzt wird.

**Claims**

1. Apparatus for measuring a volumetric flow and at least one gas partial pressure of a gaseous medium, having a measuring device including:

   - an electrically heatable probe (3) comprising a solid-state electrolyte (9), which is coated with two electrodes (11, 13), one electrode (11) being assigned to a measurement chamber (15) and the other electrode (13) being assigned to a reference chamber (17),

   - and measurement electronics, to which the electrodes (11, 13) are connected in order to determine the gas partial pressure on the basis of the probe voltage and to which the heating arrangement (19) of the probe (3) is connected in order to determine the volumetric flow on the basis of the time-dependent temperature gradient or, if the temperature of the probe (3) is kept constant, on the basis of the power supplied.

2. Apparatus according to Claim 1, in which the probe (3) is arranged in a preferably cylindrical tube (1) through which medium flows.

3. Apparatus according to Claim 2, in which the wall of the tube (1) is formed by the probe (3).

4. Apparatus according to Claim 1, in which the solid-state electrolyte (9) consists of zirconium dioxide.

5. Apparatus according to Claim 5, in which the zirconium dioxide is doped with yttrium oxide ($Y_2O_3$).

6. Method for measuring a volumetric flow and at least one gas partial pressure of a gaseous medium using an electrically heatable probe (3) comprising a solid-state electrolyte (9) which is coated with two electrodes (11, 13), one electrode (11) being assigned to a measurement chamber (15) and the other electrode (13) being assigned to a reference chamber (17), the gas partial pressure being determined on the basis of the probe voltage tapped off the electrodes (11, 13), and the volumetric flow being determined on the basis of the time-dependent temperature gradient of the probe (3) or, if the temperature is kept constant, on the basis of the power supplied to the probe (3).

7. Method according to Claim 6, in which the probe (3) is used for measuring oxygen.

8. Method according to one of Claims 6 or 7, in which the probe (3) is used to test free jets.

9. Method according to one of Claims 6 to 8, in which the probe (3) is used in the subatmospheric range and in the superatmospheric range.

**Revendications**

1. Dispositif pour mesurer un flux volumique et au moins une pression partielle de gaz d'un fluide gazeux à l'aide d'une installation de mesure, comprenant :

   - une sonde (3) chauffée électriquement, composée d'un électrolyte solide (9) revêtu de deux électrodes (11, 13), une électrode (11) étant associée à une chambre de mesure (15) et l'autre électrode (13) à une chambre de référence (17),

- et une électronique de mesure reliée aux électrodes (11, 13) pour déterminer la pression partielle du gaz à l'aide de la tension de la sonde et à laquelle est relié le moyen de chauffage (19) de la sonde (3) pour déterminer le flux volumique à partir du gradient de température en fonction du temps ou, pour une température maintenue constante de la sonde (3), à partir de la puissance fournie.

2. Dispositif selon la revendication 1,
dans lequel
la sonde (3) est installée dans un tube (1) traversé par le fluide et ayant de préférence une forme de cylindre circulaire.

3. Dispositif selon la revendication 2,
dans lequel
la paroi du tube (1) est formée par la sonde (3).

4. Dispositif selon la revendication 1,
dans lequel
l'électrolyte solide (9) est du dioxyde de zirconium.

5. Dispositif selon la revendication 5,
dans lequel
le dioxyde de zirconium est dopé avec de l'oxyde d'yttrium ($Y_2O_3$).

6. Procédé de mesure d'un flux volumique et d'au moins une pression partielle de gaz d'un fluide gazeux à l'aide d'une sonde (9) chauffée électriquement et composée d'un électrolyte solide (9) revêtu de deux électrodes (11, 13),

une électrode (11) étant associée à une chambre de mesure (15) et l'autre électrode (13) à une chambre de référence (17),
la pression partielle du gaz étant obtenue à partir de la tension de la sonde mesurée aux bornes des électrodes (11, 13), et le flux volumique se déterminant à partir du gradient de température, dépendant du temps, de la sonde (3) ou, en cas de température maintenue constante, à partir de la puissance fournie à la sonde (3).

7. Procédé selon la revendication 6,
dans lequel
on utilise la sonde (3) pour mesurer l'oxygène.

8. Procédé selon l'une quelconque des revendications 6 ou 7,
dans lequel
on utilise la sonde (3) pour examiner des faisceaux libres.

9. Procédé selon l'une quelconque des revendications 6 à 8,
dans lequel
on utilise la sonde (3) pour la plage des dépressions ou des surpressions.

ZrO₂, $D_a$= 2mm, $D_i$= 1mm

Fig. 1

Fig. 2

Fig. 3

Fig. 4

Fig. 5

Fig. 6

Fig. 7